**Europäisches Patentamt**

**European Patent Office**

**Office européen des brevets**

(19)

(11) Veröffentlichungsnummer: **0 088 280**
**B1**

(12) # EUROPÄISCHE PATENTSCHRIFT

(45) Veröffentlichungstag der Patentschrift:
**12.06.85**

(51) Int. Cl.⁴: **H 02 K 11/00**

(21) Anmeldenummer: **83101684.5**

(22) Anmeldetag: **22.02.83**

(54) Drehstromgenerator, insbesondere als Bordnetzgenerator.

(30) Priorität: **08.03.82 DE 3208307**

(73) Patentinhaber: **ROBERT BOSCH GMBH, Postfach 50, D-7000 Stuttgart 1 (DE)**

(43) Veröffentlichungstag der Anmeldung:
**14.09.83 Patentblatt 83/37**

(72) Erfinder: **Fasterding, Henning, Behringweg 20, D-7145 Markgröningen (DE)**
Erfinder: **Buck, Hartmut, Amselweg 6, D-7142 Marbach (DE)**

(45) Bekanntmachung des Hinweises auf die Patenterteilung:
**12.06.85 Patentblatt 85/24**

(84) Benannte Vertragsstaaten:
**DE FR GB**

(56) Entgegenhaltungen:
**DE - A - 2 225 729**
**DE - B - 2 342 749**

## Beschreibung

Die Erfindung betrifft einen Drehstromgenerator, insbesondere als Bordnetzgenerator für Fahrzeuge, mit zwei zur Lagerung eines zentralen, rotierend antreibbaren Läufers dienenden Lagerschilden, zwischen denen ein quer zur Läuferachse sich erstreckendes Ständerblechpaket befestigt ist, und mit drei zum Plusausgang des Generators führenden, auf einer ersten sich quer zur Läuferachse erstreckenden Kühlplatte (28) sitzenden Plusdioden (30) und mit drei mit dem Minusausgang verbundenen, auf einer zweiten, sich neben der ersten Platte quer zur Läuferachse erstreckenden Kühlplatte sitzenden Minusdioden, von denen je eine Plusdiode und eine Minusdiode paarweise über eine Leiterplatte mit je einer der auf dem Ständerblechpaket sitzenden Drehstrom-Phasenwicklungen verbunden sind, und mit einem plattenförmigen Isolierstoffteil, das zwischen die erste Kühlplatte und den die Platten mittels Schrauben halternden Lagerschild gelegt ist.

Bei den seither üblichen Ausführungsformen für derartige Generatoren ist eine aus thermoplastischem Kunststoff hergestellte Leiterplatte vorgesehen, in welche die zur gegenseitigen Verbindung der Laststromdioden mit den zugehörigen Phasenwicklungen und ggf. einem Spannungsregler dienenden Verbindungsleitungen eingespritzt sind. Da bei hohen Temperaturen die Leiterplatte nur eine begrenzte Biegefestigkeit aufweist, besteht bei der bisherigen Lösung die Gefahr, dass sich sowohl das mit Dioden bestückte Kühlblech als auch das die Minusdioden tragende zweite Kühlblech um seine jeweiligen Anschraubpunkte bewegen konnte und dadurch Drahtbrüche in den Dioden-Zu- bzw. -Ableitungen entstanden.

Der Erfindung liegt die Aufgabe zugrunde, eine solche Bewegungsmöglichkeit der Kühlplatten zu verhindern. Zur Lösung dieser Aufgabe ist erfindungsgemäss vorgesehen, dass das plattenförmige Isolierstoffteil und/oder der zu dessen Auflage dienende Lagerschild mindestens zwei gegenüber den Anschraubzonen um etwa 0,2 bis 0,3 mm erhöhte Abstützflächen aufweisen/aufweist. Vorteilhaft können drei Abstützflächen vorgesehen sein, zwischen denen jeweils eine von zwei Anschraubzonen liegt.

Die Erfindung ist nachstehend anhand eines in der Zeichnung dargestellten Ausführungsbeispieles näher beschrieben und erläutert.

Es zeigen:

Fig. 1 den antriebsfernen, schleifringseitigen Lagerschild des erfindungsgemäss gestalteten Drehstromgenerators in seiner in Achsrichtung gesehenen Innenansicht und

Fig. 2 im axialen Längsschnitt nach der Linie II-II in Fig. 1,

Fig. 3 die Gleichrichtereinheit mit ihren beiden Kühlplatten in axialer Draufsicht und

Fig. 4 in einem nach der Linie IV-IV geführten seitlichen Schnitt,

Fig. 5 das erfindungsgemäss gestaltete Isolierteil in der Ansicht auf seine dem Lagerschild nach Fig. 1 zugekehrten Oberseite,

Fig. 6 in der Ansicht von der Seite und

Fig. 7 in seiner axialen Draufsicht auf seine einer der Kühlplatten zugekehrten Vorderseite, und

Fig. 8 den schleifringseitigen Lagerschild in ähnlicher Darstellung wie in Fig. 2, jedoch ohne die Gleichrichtereinheit nach Fig. 3.

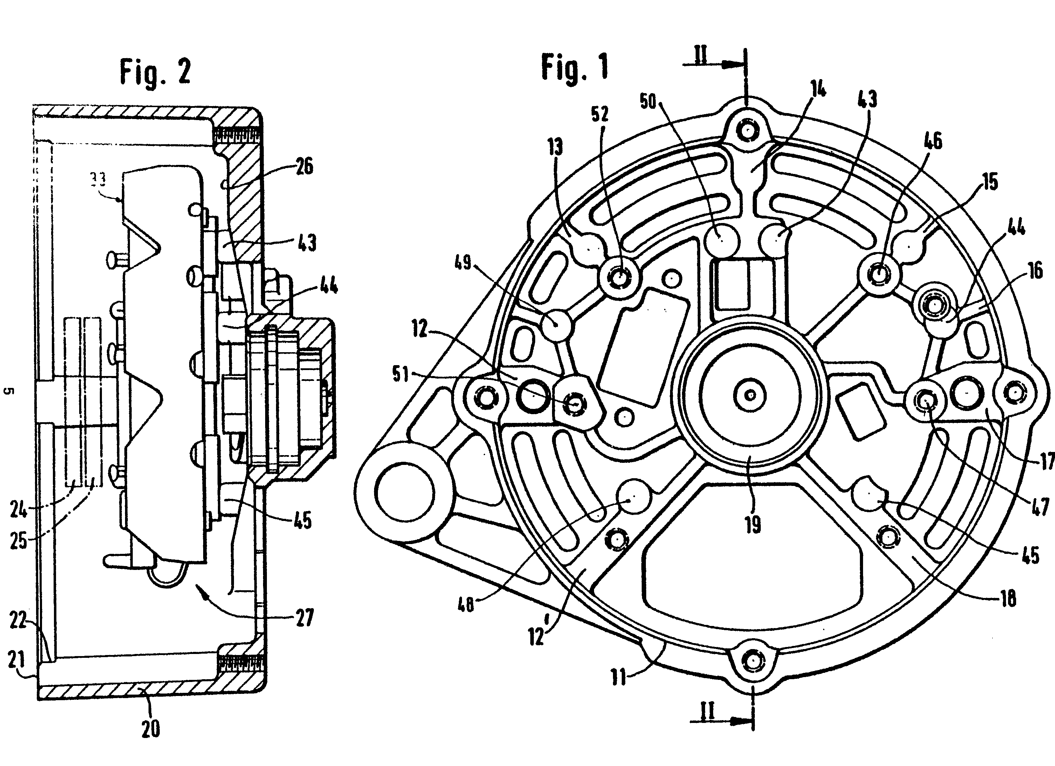

Von dem erfindungsgemäss gebauten Drehstromgenerator zeigen Fig. 1, 2 und 8 nur seinen schleifringseitigen Lagerschild 11, der an seiner inneren Bodenseite mehrere radiale Rippen 12, 12' bis 18 aufweist, die von dem zentralen Schleifringlager 19 ausgehen und dieses mit der zylindrischen Wand 20 des Lagerschildes verbinden. An ihrer offenen Stirnseite 21 enthält die Wand 20 einen Einpass 22 zur Aufnahme eines nicht dargestellten, ringförmigen Ständerblechpaketes. Dieses trägt gleichmässig über seine Bohrung verteilte, nicht dargestellte Drehstromwicklungen, die von einem ebenfalls nicht dargestellten Klauenpolläufer induziert werden, welcher an einem seiner beiden Wellenenden in dem Schleifringlager 19 mit nicht dargestellten Kugellagern aufgenommen ist und die beiden in Fig. 1 mit unterbrochenen Linien angedeuteten Schleifringe 24, 25 trägt, über welche mit ebenfalls nicht dargestellten Schleifkohlen dem Läufer der notwendige Erregerstrom zugeführt wird.

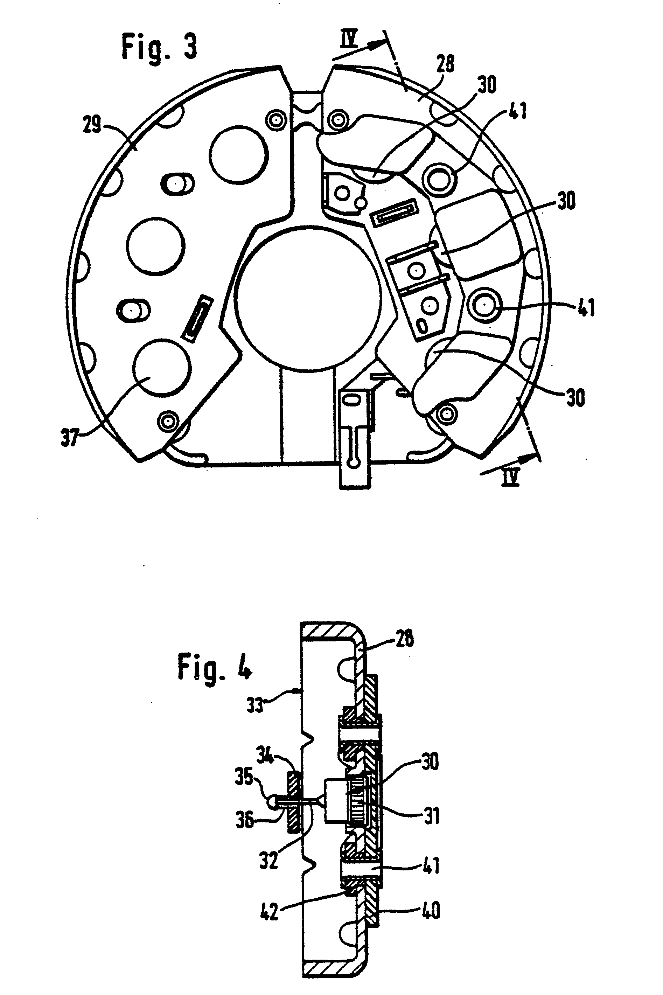

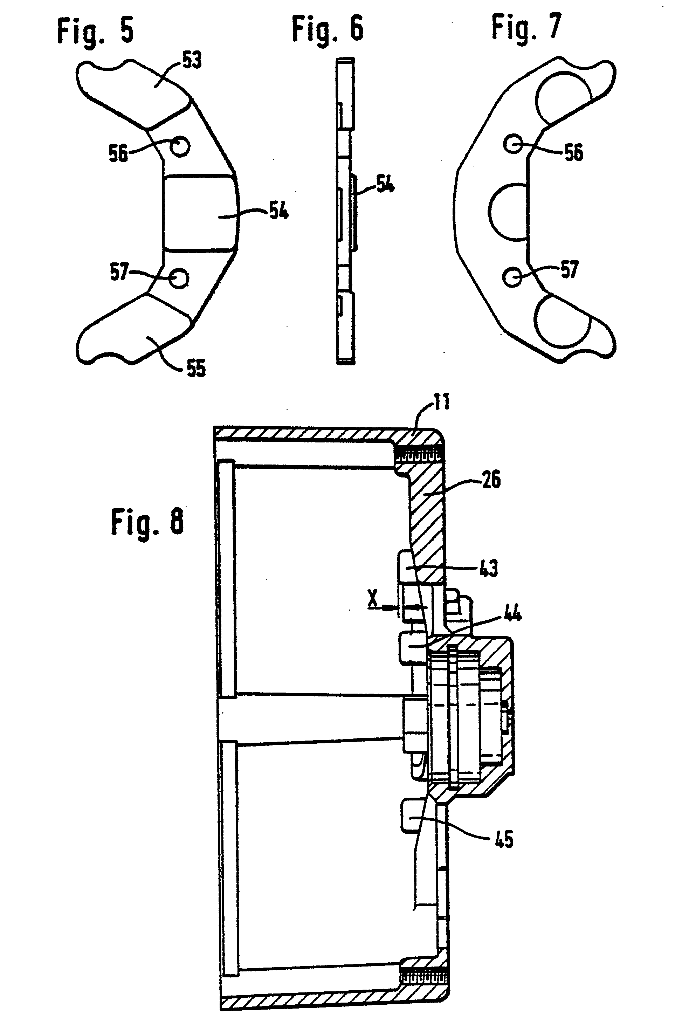

Zwischen dem Schleifring 25 und dem Boden 26 des Lagerschildes 11 ist die Gleichrichtereinheit 27 angeordnet. Dieses ist in Fig. 3 in axialer Draufsicht und in Fig. 4 im Schnitt dargestellt. Sie besteht im einzelnen aus zwei etwa nierenförmig geprägten Kühlplatten 28 und 29, von denen die Kühlplatte 28 drei Plusdioden 30 trägt, die mit ihrer Rändelzone 31 nach Fig. 4 eingepresst sind und mit ihrem über den Rand 33 der Kühlplatte 28 vorstehenden Anschlussdraht 32 in eine Leiterplatte 34 aus Kunststoff hineinstechen, wo sie mit Leiterschlaufen 35 verschweisst sind. Diese Leiterschlaufen sind von in die Leiterplatte 34 eingebetteten, drahtförmigen Leitern gebildet und dienen zur Verbindung mit den nicht dargestellten, zugehörigen Minusdioden 37, welche in die zweite Kühlplatte 29 eingepresst sind. Wärend die Kühlplatte 29 Minuspotential führt und daher gegenüber dem aus Aluminium gegossenen Lagerschild 11 nicht isoliert zu werden braucht, sondern mit diesem beim Aufschrauben in unmittelbar leitende Verbindung gelangt, kann die Kühlplatte 28, welche Pluspotential führt, nur unter Zwischenlage eines Isolierstoffteiles 40 gegen den Boden 26 des Lagerschildes 11 festgeschraubt werden.

Dieses Isolierstoffteil 40 ist in den Fig. 5, 6 und 7 im einzelnen näher dargestellt und mittels zweier Hohlnieten 41 unter Zwischenlage von Isolierstoffköpfen 42 mit der Kühlplatte 28 vernietet.

Damit beim Anschrauben der Kühlplatte 28 an den Boden 26 des Lagerschildes 11 eine ausreichende elastische Verspannung entsteht, sind in der aus Fig. 8 erkennbaren Weise drei als Anlageflächen vorgesehene Ansätze 43, 44 und 45 an den Boden 26 und die Rippen 14, 16 und 18 angegossen. Diese Augen stehen etwa 0,2 bis 0,3 mm in der in Fig. 8 durch das Mass X angedeuteten Weise über und ergeben daher ein die Verspannung erlaubendes Spiel, wenn durch die Hohlnieten 41 nicht dargestellte Kopfschrauben eingeführt und in die beiden je zwei Anschraubzonen bildenden Gewindebohrungen 46 und 47 eingedreht werden.

Als Anlageflächen sind korrespondierende Ansätze 8, 49 und 50 auf der in Fig. 1 dargestellten, linken Bodenhälfte vorgesehen, gegen welche die Minuskühlplatte 29 unmittelbar mit zwei nicht dargestellten, in die Gewindebohrungen 51 und 52 eingedrehte Kopfschrauben festgespannt werden kann.

Beim dargestellten Ausführungsbeispiel sind nicht nur am Boden 26 des Lagerschildes 11, sondern auch auf der diesem zugekehrten Rückseite in der aus den Fig. 5 und 6 erkennbaren Weise erhöhte Felder 53, 54 und 55 zwischen den für die Befestigungsschrauben vorgesehenen Durchgangslöchern 56 und 57 vorgesehen. In Verbindung mit den Ansätzen 43, 44 und 45 ergibt sich nach dem Einbau mit der Gleichrichtereinheit 27 ein zuverlässiger Sitz der Gleichrichtereinheit am Boden 26 des Lagerschildes 11, durch welchen jede Gefahr eines Diodendrahtbruches ausgeschaltet wird.

**Patentansprüche**

1. Drehstromgenerator, insbesondere als Bordnetzgenerator für Fahrzeuge, mit zwei zur Lagerung eines zentralen, rotierend antreibbaren Läufers dienenden Lagerschilden (11), zwischen denen ein quer zur Läuferachse sich erstreckendes Ständerblechpaket befestigt ist, und mit drei zum Plusausgang des Generators führenden, auf einer ersten, sich quer zur Läuferachse erstreckenden Kühlplatte (28) sitzenden Plusdioden (30), und mit drei mit dem Minusausgang verbundenen, auf einer zweiten sich neben der ersten Platte quer zur Läuferachse erstreckenden Kühlplatte (29) sitzenden Minusdioden (37), von denen je eine Plusdiode und eine Minusdiode paarweise über eine Leiterplatte (34) mit je einer der auf dem Ständerblechpaket sitzenden Drehstrom-Phasenwicklungen verbunden sind, und mit einem plattenförmigen Isolierstoffteil, das zwischen die erste Kühlplatte (28) und den die Platten mittels Schrauben halternden Lagerschild (11) gelegt ist, dadurch gekennzeichnet, dass das plattenförmige Isolierstoffteil (40) und/oder der zu dessen Auflage dienende Lagerschild (11) mindestens zwei gegenüber den Anschraubzonen (46, 47) um etwa 0,2 bis 0,3 mm erhöhte Abstützflächen (53, 54, 55; 43, 44, 45) aufweisen/aufweist.

2. Generator nach Anspruch 1, dadurch gekennzeichnet, dass drei Abstützflächen (53, 54, 55) am Isolierstoffteil (40) vorgesehen sind, zwischen denen je eine von zwei Durchgangsbohrungen (56, 57) liegen, die zur Aufnahme von Spannschrauben dienen.

**Claims**

1. Three-phase generator, particularly as on-board supply system generator for vehicles, having two end plates (11), which are used for supporting a central rotor which can be driven to rotate, between which plates a stator lamination stack is mounted which extends transversely to the rotor axis, and three positive diodes (30) which lead to the positive output of the generator and are located on a first cooling plate (28) which extends transversely to the rotor axis, and three negative diodes (37) which are connected to the negative output and are located on a second cooling plate (29) which extends transversely to the rotor axis adjacently to the first plate, of which diodes one positive diode and one negative diode each are connected in pairs via a circuit board (34) to one each of the three-phase phase windings located on the stator lamination stack, and a plate-shaped part of insulating material which is interposed between the first cooling plate (28) and the end plate (11) which holds the plates by means of screws, characterised in that the plate-shaped part (40) of insulating material and/or the end plate (11) used as support for this part are/is provided with at least two support faces (53, 54, 55; 43, 44, 45) which are raised by about 0.2 to 0.3 mm with respect to the screwing-down zones (46, 47).

2. Generator according to Claim 1, characterised in that three support faces (53, 54, 55) are provided at the part (40) of insulating material, between which faces one each of two through holes (56, 57) are located which are used for accommodating clamping bolts.

**Revendications**

1. Générateur de courant alternatif, en particulier générateur de bord pour véhicules automobiles, comportant deux flasques à palier (11), servant à la fixation d'un rotor central qui peut être entraîné en rotation, entre lesquels est fixé un empilage de tôles du stator, s'étendant perpendiculairement à l'axe du rotor et comportant trois diodes positives (30), allant à la sortie positive du générateur, posées sur une première plaque de refroidissement (28) s'étendant transversalement à l'axe du rotor, et trois diodes négatives (37), reliées avec la sortie négative, posées sur une seconde plaque de refroidissement (29) s'étendant à côté de la première plaque, perpendiculairement à l'axe du rotor, une diode positive et une diode négative étant reliées chaque fois par paires, au moyen d'une plaque (34) conductrice, avec des bobinages de phase de courant alternatif posés sur l'empilage de tôles du stator, et comportant aussi une pièce en matière isolante en forme de plaque qui est posée entre la première plaque de refroidissement (28) et le flasque à palier (11) maintenant les plaques au moyen de vis, générateur caractérisé en ce que la pièce (40) en matière isolante en forme de plaque, et/ou le flasque à palier (11) servant à son appui, présente au moins deux surfaces d'appui (53, 54, 55; 43, 44, 45) surélevées par rapport aux zones de vissage (46, 47) d'environ 0,2 à 0,3 mm.

2. Générateur suivant la revendication 1, caractérisé en ce qu'il est prévu trois surfaces d'appui (53, 54, 55) sur la pièce en matière isolante (40) entre lesquelles se trouve chaque fois un des deux trous de passage (56, 57) qui servent à recevoir les vis de serrage.

**Fig. 2**

**Fig. 1**

0 088 280

# Fig. 3

# Fig. 4

# Fig. 5

# Fig. 6

# Fig. 7

# Fig. 8